# EUROPEAN PATENT SPECIFICATION

(11) **EP 2 456 255 B1**
(45) Date of publication and mention of the grant of the patent: **24.07.2019**
(21) Application number: 10191948.8
(22) Date of filing: 19.11.2010
(51) Int. Cl.: H04W 24/02, H04W 28/08, H04W 48/06

(54) **Device and method for communications in a communication network**
Vorrichtung und Verfahren für Kommunikationen in einem Kommunikationsnetzwerk
Dispositif et procédé pour communications dans un réseau de communication

(43) Date of publication of application: 23.05.2012
(73) Proprietor: Huawei Technologies Co., Ltd., Shenzhen, Guangdong 518129 (CN)
(72) Inventor: Schramm, Mirko, 80992 Munich (DE); Schramm, Frank, 80992 Munich (DE)
(74) Representative: Kreuz, Georg Maria

(56) References cited:
- EP-A1- 1 420 604
- WO-A1-2009/127254
- WO-A1-2010/068155
- US-A1- 2005 037 771
- NEC: "Details on Load Balancing and ICIC Signaling Mechanism", 3GPP DRAFT; R3-080388_DETAILS ON LOAD BALANCING AND ICIC SIGNALING MECHANISM, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Sorrento, Italy; 20080205, 5 February 2008 (2008-02-05), XP050163593, [retrieved on 2008-02-05]
- MURRAY K ET AL: "Policy based access management and handover control in heterogeneous wireless network", 2004 IEEE 60TH VEHICULAR TECHNOLOGY CONFERENCE. VTC2004-FALL (IEEE CAT. NO.04CH37575) IEEE PISCATAWAY, NJ, USA,, vol. 5, 26 September 2004 (2004-09-26), pages 3319-3323, XP010787490, DOI: 10.1109/VETECF.2004.1404678 ISBN: 978-0-7803-8521-4

## Description

### BACKGROUND OF THE INVENTION

The present invention relates to communications in a communication network, in particular to radio communication systems such as a 2nd generation system, e.g. a Global System for Mobile Communications (GSM) or a 3rd Generation Partnership Project (3GPP) system, e.g. a Universal Mobile Telecommunications System (UMTS) or Long Term Evolution (LTE).

For example, mobile communication networks, e.g. based on 3GPP, have to be able to handle an unpredictable amount of users and their traffic as the physical movement of the user cannot be influenced nor their desire to use services. Users are conventionally allowed to connect to the mobile communication network at any time according to their subscription and/or end user device limitations. Of course, this is true apart from exceptional situations like severe network outages. However, the operator of the network may always be able to influence the services which a user may utilize to ensure the usability of the mobile communication network for all users that are currently connected to it.

For instance, the operator may block a service or influence the way of service provisioning for a specific user in order to balance the usage of the available resources amongst all users.

Depending on the nature or property of the service different approaches exist. Non-real-time services are conventionally controlled in an indirect way by means of the available resources, i.e. they typically get resources assigned, which are shared amongst the non-real-time service instances. Services with real-time constraints, like voice over IP, are conventionally requiring dedicated and permanently allocated resources for their exclusive use, also known as guaranteed bit rate.

As the capacity of a mobile communication network in general, and specifically on the path from the end user device through the mobile network, is limited, the network may only reject a service, in particular a real-time service , once the available resources may be not sufficient to fulfil the needs of the service. This process is called admission control and takes place in all entities along the path from the end user device through the mobile network. The air interface and/or the connection between the radio access node and the core network are typically representing the bottleneck.

In addition to the functionality described above, the mobile network may need to change the radio access node or network entity a user is connected to if there is an alternative radio access point available. Such a change of a radio access point is also called handover. Such a handover may typically happen due to user mobility but other reasons are possible as well.

Several criterions, like radio signal strength, node capacity, current load or the like, may be used to trigger the change of a radio access point which is also called handover. During the handover, the target radio access point is performing admission control as well based on a description of the currently allocated resources at the source radio access point. If resources are available at the target radio access point, the services may continue. If not, the services for which resources are no longer sufficient have to be adapted or terminated.

Consequently, the radio access point being controlling the air interface and the connection between the radio access point and the core network needs to manage its resources in a way that the usability of the mobile network is maximized for both, the users that are starting new services as well as the users with ongoing services that are handed over.

The available resources are conventionally managed according to a fixed distribution, said fixed distribution defining individual shares for handover traffic, real-time traffic and non-real time traffic. This ensures that the resources cannot be given completely to a single type of traffic which would starve out the other traffic types. This configuration is typically done in a static manner when the network is dimensioned and deployed according to the radio access node capacity, the number and capacity of the neighbour radio access nodes and the expected traffic mix.

Current approaches for maximizing the usability of the mobile network are focusing on the control of the handover between neighboured radio access nodes. They allow for a certain optimization as long as the user is in the coverage of at least two radio access nodes, i.e. it may be served by more than one radio access node. Once this is no longer the case, only the admission control of the target radio access node may decide on a continuation of the user's services.

Thus, the resource management may typically be configured in a conservative way so that there is a high probability that handover traffic may be served by a radio access node. However, this also results in a constrained amount of resources for the non-handover traffic even in the case that the actual network situation is such that it is very unlikely that handover traffic will reach the expected level. In other words, resources available for real-time traffic cannot be given to new services because they are blocked for potential handover traffic which will not occur at this point in time. Consequently, capacity of the communication network is not used.

US 2005/0037771 A1 relates to an apparatus, a system, and a method for efficiently managing reverse link communication in a communication system having geographically distributed base stations.

WO 2009/127254 A1 relates to a method for configuring a wireless telecommunications network adapted to operate according to at least one radio system, the network comprising a plurality of re-configurable base radio stations (BSI, BS2, BSk), wherein each base radio station is adapted to manage one or more cells of the telecommunications network, and wherein each cell has corresponding radio resources available.

WO 2010/068155 A1 relates to a node of a multi-radio access technology (RAT) system acquiring resource status information associated with each RAT of the multi-RAT system.

NEC: "Details on Load Balancing and ICIC Signaling Mechanism", 3GPP DRAFT; R3-080388_DETAILS ON LOAD BALANCING AND ICIC SIGNALING MECHANISM, 3RD GENERATION PARTNERSHIP PROJECT (3GPP), MOBILE COMPETENCE CENTRE ; 650, ROUTE DES LUCIOLES ; F-06921 SOPHIAANTIPOLIS CEDEX ; FRANCE, vol. RAN WG3, no. Sorrento, Italy; 20080205, 5 February 2008 (2008-02-05), relates to details about the signalling involved in order to have load balancing.

EP 1420604 A1 relates to a load traffic management method based on the exchange of service specific free capacity information elements among network controllers.

K. Murray and D. Pesch describe "Policy based access management and handover control in heterogeneous wireless networks", in Vehicular Technology Conference, 2004. VTC2004-Fall. 2004 IEEE 60th, pages 3319 - 3323 Vol. 5, issue date: 26-29 Sept. 2004, ISBN: 0-7803-8521-7.

S. Feng and E. Seidel describe "Self-Organizing Networks (SON) in 3GPP Long Term Evolution", in Nomor research, date 20 May 2008.

### SUMMARY OF THE INVENTION

A goal to be achieved by the present invention is to improve the usage of the capacity of the communication network.

This goal is achieved by the independent claims. Dependent claims refer to preferred solutions.

According to a first aspect, a network entity for communications in a communication network is suggested. The network entity is configured to communicate with at least a number of further network entities in the communication network. The network entity has a receiver and a processor. The receiver is configured to receive a number of load indications, each of the number of load indications indicating a current load of at least one further network entity in the communication network. The processor is configured to control a resource management in the network entity in dependence on the received load indications.

By controlling the resource management of the network entity in dependence on the received load indications, the usage of the capacity of the communication network may be improved.

In particular, a dynamic configuration based on the resource situation indicated by said load indications of the neighboured or further network entities, in particular neighboured radio access nodes, may improve the usage of the capacity of the communication network. For example, a reduced probability of handover may be reflected in the reduction of resources reserved for handover traffic in the further entities, which may be potential target access nodes.

Thus, available resources for real-time traffic may be given to other services because they are not blocked for potential handover traffic. Real-time traffic or real-time resources may exemplarily be determined by 3GPP QoS Class Identifiers (QCIs) 1 to 4 or the Quality of Service (QoS) parameter Guaranteed Bit Rate (GBR).

In particular, the processor of the present network entity may control the admission control entity of the network entity for making decisions about the usage of the resources controlled by the resource management based on the present dynamic configuration. The present dynamic configuration based on the received load indications may define how the available resources may be allocated to the various types of requested services and may consider in additional a certain load situation at the network entity, e.g. normal load or overload.

According to a first implementation form of the first aspect, the network entity has an admission control entity which is adapted to change pre-configured shares for handover traffic, real-time traffic and/or non-real time traffic of the resource management in dependence on a processing scheme the processor performs with respect to the received current load indications.

For adapting said shares, the processor may perform said processing scheme with the received current load indications as input parameters. Said processing scheme may include additions, subtractions and/or multiplications. Thus, pre-configured shares for handling the traffic, real-time traffic and non-real-time traffic resources may then be changed according to the load situations of the further network entities, in particular the surrounding or neighboured radio access nodes. Especially, the amount of resources reserved for handover traffic may be of particular interest, as these are only required if traffic from a neighboured radio access node has to be taken over.

According to a second implementation form of the first aspect, the respective load indication includes a first indicator indicating a real-time traffic of the respective further network entity and a second indicator indicating an overall traffic of the respective further network entity.

For example, the network entities may measure their load over time by means of said above two values: real-time traffic and overall traffic. These load measurements may be exchanged between neighboured network entities, in particular between neighboured radio access nodes, by means of said first indicator and said second indicator.

According to a third implementation form of the first aspect, the processor is adapted to estimate from the received current load indications an estimation value for the handover capacity according to the probability for handover from the further network entities and to change a handover capacity of the resource management in dependence on the calculated estimation value.

By changing the handover capacity of the resource management in dependence on the calculated estimation value, the resources reserved for handover traffic or handover capacity may be adjusted according to the actual needs, i.e. current load situations of the further or surrounding network entities.

According to a fourth implementation form of the first aspect, the network entity is embodied as a radio access node.

Moreover, all the further network entities may be embodied as neighboured network entities, in particular as neighboured radio access nodes.

According to a fifth implementation form of the first aspect, the network entity is embodied as a radio access node, wherein the processor is adapted to change an admission control of the resource management in dependence on the load indications received from a number of further radio access nodes.

In particular, the admission control in the network entity may be adjusted according to the traffic or load which is currently handled by the further or surrounding network entities, and potentially by additional information like handover probability to the specific further network entities, because this traffic or at least parts of this traffic may become relevant for the handover. The network entity may allocate more resources to new services if the surrounding network entities report only low traffic. If the surrounding network entities report moderate or even high load, the admission control may become more restrained in the network entity. The present dynamic resource management may enable a better usability of the mobile communication network during periods of low or moderate load whilst ensuring high probability for successful handovers otherwise. This may be especially advantageous for real-time traffic and in case of frequent handovers or load changes.

According to a sixth implementation form of the first aspect, the network entity is embodied as a radio access node, wherein the processor is adapted to change an admission control of the resource management in dependence on the load indications received from a number of further radio access nodes and in dependence on an estimate of a handover capacity for a handover from one of the number of further radio access nodes.

According to a seventh implementation form of the first aspect, the network entity is embodied as a radio access node, wherein the processor is adapted to change, in particular to permanently change an admission control of the resource management in dependence on the load indications received from a number of further radio access nodes.

According to this embodiment, a permanent adjustment of handover capacity may be possible according to the load situation in the respective area. In this regard, the handover capacity may be adopted according to potentially incoming handover traffic of the further neighboured network entities. If the load reported by the neighboured network entities is low, the potential handover traffic may also decrease and thus the handover capacity may be reduced to allow for potential admission of more new services. If the load reported by the further neighboured network entities increases over time, the handover capacity may similarly be increased up to the original configured value. A benefit of this approach may be the possibility to admit more new services in an unloaded area due to the fact that the handover capacity is correlated with the load situation of the further neighboured network entities, in particular the neighboured radio access nodes.

According to an eighth implementation form of the first aspect, the network entity is embodied as a radio access node, wherein the processor is adapted to permanently change an admission control of the resource management in dependence on the load indications received from a number of further radio access nodes such that shares for real-time traffic and/or non-real-time traffic are increased for the case that the received load indications indicate a load of the further radio access nodes being under a defined load threshold.

The advantages of this embodiment may be explained by the following example: If the load of the present radio access node is low, but most neighboured radio access nodes report high load, the radio access node may be even more restrictive in the resource allocation for new services than the initial configuration is. While this would result in a higher percentage of rejected services than without load dependent adjustments, the overall success rate of the potential handovers to the already loaded radio access nodes is increased. This may be an important effect as blocked new services are generally more acceptable to the end user than service interruptions or forced service terminations. At the same time, the success rate of the handovers from the neighboured radio access nodes may be increased due to the availability of additional resources that may be no longer required for the new services.

According to a ninth implementation form of the first aspect, the network entity is embodied as a radio access node, wherein the processor is adapted to temporarily increase the shares for real-time traffic and non-real-time traffic by using resources of the handover capacity when the received load indications indicate a load of the further radio access nodes being under a defined load threshold.

In particular, the processor is adapted to temporarily exceed pre-configured shares of real-time traffic and non-real-time traffic by using resources of the handover capacity, such that the shares for real-time traffic and non-real-time traffic are temporarily increased for the case that the received load indications indicate a load of the further radio access nodes being under a defined load threshold.

By means of this embodiment, a temporary assignment of resources belonging to the handover capacity to new services may be achieved. For example, if neighboured radio access nodes report low load, a radio access node may temporarily allocate resources belonging to the handover capacity if there are no other resources available. Such a decision may be taken on a per service basis, i.e. a separate decision may be taken for each new service request. In particular, there is a certain threshold applied to ensure that there is enough handover capacity remaining. For instance, the number of services for which resources belonging to the handover capacity is assigned may be limited or the decision may depend on the service characteristics, e.g. only voice services may be accepted while video services may be rejected. A benefit of this approach may be that a radio access node in an unloaded area can temporarily admit more new services compared to a situation according to the initial configuration without permanently changing the resource management configuration. Thus, the risk of a too high load which may not be handled by other radio access nodes may be prevented. This may allow for addressing scenarios with frequent or unexpected load changes in an unloaded area, e.g. a large group of people that want to establish a call after the meeting has finished. If this area is already having a normal or high load, there may be no possibility to accept more new services than what is configured, as the handover capacity has to be kept to accommodate potential handover traffic.

According to a tenth implementation form of the first aspect, the network entity is embodied as a radio access node, wherein the processor is adapted to temporarily increase the share for handover traffic over a pre-defined handover capacity when a load of the radio access node (101, 201) is low and the received load indications indicate a load of the further radio access nodes being under a defined load threshold.

In particular, the processor is adapted to temporarily exceed pre-configured shares of the resources for handover traffic by using resources of real-time traffic and non-real-time traffic such that the share for handover traffic is temporarily increased over a pre-defined handover capacity for the case that a load of the radio access node is low and the received load indications indicate a load of the further radio access nodes being under a defined load threshold.

By means of this embodiment, temporary assignment of resources reserved for new services for handover traffic may be achieved. For example, if the load of a radio access node is low and most neighboured radio access nodes report low load as well, the radio access node may temporarily allocate resources above the handover capacity to handle higher than expected incoming handover traffic, e.g. a bus arriving or a moving crowd of people for example leaving a stadium after a soccer match. While this decision may primarily be influenced by the load the affected radio access node, the surrounding load situation may be of relevance as well, since the admitted handover traffic may soon be moving to another radio access node. A benefit of this approach may be an increased probability for a successful handover in case of higher than expected and thus configured incoming handover traffic.

According to a eleventh implementation form of the first aspect, the processor is configured to change a handover capacity of the resource management in dependence on the received load indications and in dependence on at least one criterion of the group of: first criterion indicating expected user mobility, second criterion indicating currently running service types, and third criterion indicating detailed load information.

According to this embodiment, additional criteria may be considered for the adjustment of the handover capacity. Said first criterion indicating the expected user mobility may prevent an over-allocation for the handover capacity. Further, said second criterion indicating currently running service types and said third criterion indicating detailed load information may be beneficial with regard to the amount of resources by which the handover capacity may be adjusted.

Any implementation form of the first aspect may be combined with any implementation form of the first aspect to obtain another implementation form of the first aspect.

According to a second aspect, a system for communications in a communication network is suggested, the system having a plurality of the above described network entities according to the first aspect.

Without loss of generality, said plurality may be greater or equal to two.

According to a first implementation form of the second aspect, the system has a categorizer for categorizing the network entities into different categories in dependence on respective properties of the subscriber entities allocated to the respective network entity, wherein the processor of the respective network entity is adapted to weight the respective received load indication in dependence on the category of the respective network entity and to control the resource management in the network entity in dependence on the weighted load indications.

According to this embodiment, the network entities, in particular the radio access nodes, may be separated into categories according to the properties or natures of the subscribers, e.g. primarily nomadic, normal or primarily mobile. Thus, the relevance and amount of handover traffic may be improved. For example, the load situation may be of special interest for neighboured radio access nodes that are both of primarily mobile nature. If they exchange load information frequently, the handover capacity may be adjusted in an optimized way so that e.g. a moving crowd of people may be served. Additionally, a load as reported by neighboured radio access nodes may be weighted according to the category, i.e. normal or high load reported by a radio access node with primarily nomadic subscribers may generate less handover traffic than a radio access node with primarily mobile subscribers reporting the same amount of load.

The receiver may be any receiving means. Furthermore, the processor may be any processing means. Moreover, the admission control entity may be any admission controlling means.

The respective means, in particular the receiver, the processor and the admission control entity, may be implemented in hardware or in software. If said means are implemented in hardware, it may be embodied as a device, e.g. as a computer or as a processor or as a part of a system, e.g. a computer system. If said means are implemented in software it may be embodied as a computer program product, as a function, as a routine, as a program code or as an executable object.

According to a third aspect, a method for controlling a network entity in a communication network is provided, the network entity being able to communicate with at least a number of further network entities in the communication network. The method has a step of receiving a number of load indications, each of the number of load indications indicating a current load of at least one further network entity in the communication network, and a step of controlling a resource management in the network entity in dependence on the received load indications.

According to a fourth aspect, the invention relates to a computer program comprising a program code for executing the method for controlling a network entity in a communication network of the third aspect when run on at least one computer.

### BRIEF DESCRIPTION OF THE DRAWINGS

Further embodiments of the invention will be described with respect to the following figures in which:
- Fig. 1: shows a first embodiment of a network entity for communications in a communication network,
- Fig. 2: shows a second embodiment of a network entity for communications in a communication network,
- Fig. 3: shows a first embodiment of a system for communications in a communication network,
- Fig. 4: shows a second embodiment of a system for communications in a communication network, and
- Fig. 5: shows an embodiment of a method for controlling a network entity in a communication network.

### DETAILED DESCRIPTION OF EMBODIMENTS OF THE INVENTION

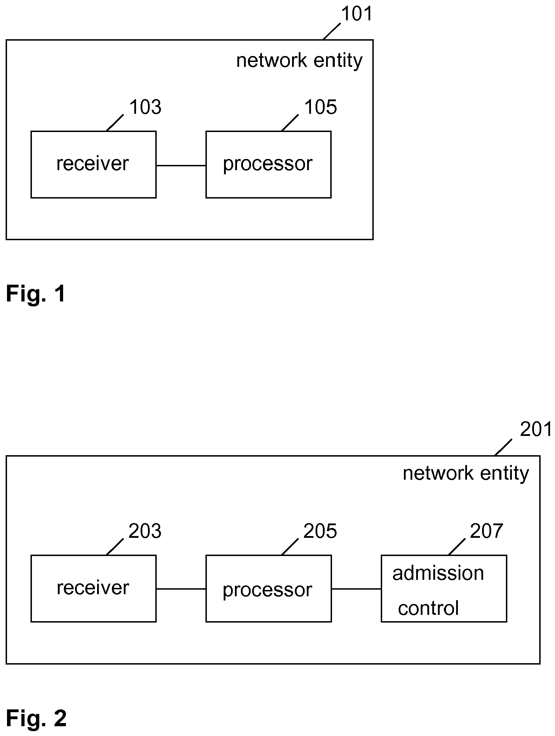

In Fig. 1, a first embodiment of a network entity 101 for communications in a communication network is depicted.

The network entity 101 is configured to communicate with at least a number of further network entities in the communication network. The network entity 101 and the further network entities may be embodied as a radio access node, respectively.

The network entity 101 has a receiver 103 and a processor 105.

The receiver 103 is configured to receive a number of load indications. Each of the number of load indications indicates a current load of at least one further network entity in the communication network.

The respective load indication may include a first indicator and a second indicator. The first indicator may indicate a real-time traffic of the respective further network entity. Moreover, the second indicator may indicate an overall traffic of the respective further network entity.

The processor 105 may be configured to control a resource management in the network entity 101 in dependence on the received load indications.

In particular, the processor 105 may be adapted to calculate from the received current load indications an estimation value for the handover capacity according to the probability for handover from the further network entities. In this regard, the processor 105 may further be configured to change a handover capacity of the resource management in dependence on the calculated estimation value.

Furthermore, for the case that the network entities are radio access nodes, the processor 105 may be adapted to change an admission control of the resource management in dependence on the load indications received from a number of further radio access nodes neighboured to said radio access node and in dependence on a calculated value of an estimated handover capacity for a handover from one of the number of further radio access nodes.

As an example, the processor 105 may permanently change the admission control of the resource management in dependence on the load indications. In particular, the processor 105 may increase the shares for real-time traffic and non-real-time traffic for the case that the received load indications indicate a load of the further radio access nodes being under a defined load threshold.

Further, the processor may be adapted to temporarily exceed pre-configured shares of real-time traffic and non-real-time traffic by using resources of the handover capacity such that the shares for real-time traffic and non-real-time traffic are temporarily increased for the case that the received load indications indicate a load of the further radio access nodes being under a defined load threshold.

Moreover, said shares for handover traffic may temporarily be increased over a predefined handover capacity for the case that the load of the radio access node 101 is low and the received load indications indicate the load of the further radio access nodes being under a defined load threshold.

For example, the processor 105 may be configured to change said handover capacity in dependence on the received load indications and in dependence on at least one criterion of the group of: first criterion indicating expected user mobility, second criterion indicating currently running services and third criterion indicating detailed load information.

Fig. 2 shows a second embodiment of a network entity 201 for communications in a communication network. The network entity 201 has a receiver 203 and a processor 205. Said receiver 203 and said processor 205 are particularly embodied as the receiver 103 and the processor 105 as described with reference to Fig. 1, respectively.

Further, the network entity 201 has an admission control entity 207. Said admission control entity 207 is adapted to change pre-configured shares for handover traffic, real-time traffic and/or non-real-time traffic of the resource management in dependence on the calculations the processor 205 is performing with the received current load indications.

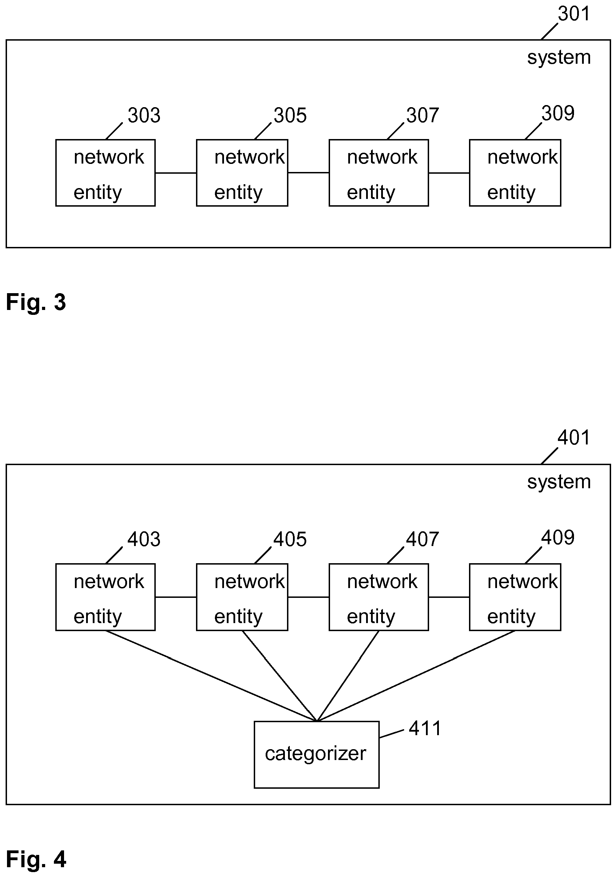

In Fig. 3, a first embodiment of a system 301 for communications in a communication network is depicted. The system 301 has a plurality of network entities 303, 305, 307 and 309. Without loss of generality, Fig. 3 shows only four network entities 303, 305, 307 and 309.

Said network entities 303, 305, 307 and 309 may be embodied as the network entity 101 of Fig. 1 or as the network entity of network entity 201 of Fig. 2.

Moreover, in Fig. 4, a second embodiment of a system 401 for communications in a communication network is illustrated. Additionally, to the system 301 of Fig. 3, the system 401 of Fig. 4 has a categorizer 411. As in Fig. 3, the system 401 has four network entities 403, 405, 407 and 409.

The categorizer 411 is configured to categorize the network entities 403, 405, 407, 409 into different categories in dependence on respective properties of the subscriber entities allocated to the respective network entity 403, 405, 407 and 409. The processor of the respective network entity 403, 405, 407 and 409 is adapted to weight the respective received load indication in dependence on the category of the respective network entity 403, 405, 407, 409 and to control the resource management in the network entity 403, 405, 407, 409 in dependence on the weighted load indications.

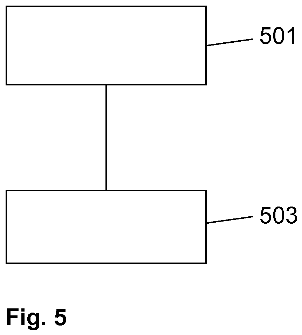

Fig. 5 shows an embodiment of a method for controlling a network entity in a communication network, wherein the network entity is able to communicate with at least a number of further network entities in the communication network.

In a step 501, a number of load indications are received. Each of the number of load indications describes a current load of at least one further network entity in the communication network.

In step 503, a resource management in the network entity is controlled in dependence on the received load indications.

## Claims

1. Network entity (101, 201) for communications in a communication network, the network entity (101, 201) being able to communicate with at least a number of further network entities in the communication network, the network entity (101, 201) comprises:
a receiver (103, 203) adapted to receive a number of load indications, each of the number of load indications indicating a current load of at least one further network entity in the communication network, and
a processor (105, 205) adapted to control a resource management of the network entity (101, 201) in dependence on the received load indications,
**characterized by** further comprising
an admission control entity (207) which is adapted to change pre-configured shares for handover traffic, real-time traffic or non-real time traffic of the resource management in dependence on a processing scheme the processor (205) performs with respect to the received current load indications.

2. Network entity of claim 1, wherein the respective load indication includes a first indicator indicating a real-time traffic of the respective further network entity and a second indicator indicating an overall traffic of the respective further network entity.

3. Network entity of one of the preceding claims, wherein the processor (105, 205) is adapted to determine from the received current load indications an estimation value for the handover capacity according to the probability for handover from the further network entities and to change a handover capacity of the resource management in dependence on the calculated estimation value.

4. Network entity of one of the preceding claims, wherein the network entity (101, 201) is embodied as a radio access node.

5. Network entity of one of the preceding claims, wherein the network entity (101, 201) is embodied as a radio access node, and wherein the processor (105, 205) is adapted to change an admission control of the resource management in dependence on the load indications received from a number of further radio access nodes.

6. Network entity of one of the preceding claims, wherein the network entity (101, 201) is embodied as a radio access node, and wherein the processor (105, 205) is adapted to change an admission control of the resource management in dependence on the load indications received from a number of further radio access nodes and in dependence on an estimate of a handover capacity for a handover from one of the number of radio access nodes.

7. Network entity of one of the preceding claims, wherein the network entity (101, 201) is embodied as a radio access node, and wherein the processor (105, 205) is adapted to change an admission control of the resource management in dependence on the load indications received from a number of further radio access nodes.

8. Network entity of one of the preceding claims, wherein the network entity (101, 201) is embodied as a radio access node, and wherein the processor (105, 205) is adapted to change an admission control of the resource management in dependence on the load indications received from a number of further radio access nodes such that shares for real-time traffic or non-real-time traffic are increased for the case that the received load indications indicate a load of the further radio access nodes being under a defined load threshold.

9. Network entity of one of the preceding claims, wherein the network entity (101, 201) is embodied as a radio access node, and wherein the processor (105, 205) is adapted to temporarily increase the shares for real-time traffic and non-real-time traffic by using resources of the handover capacity when the received load indications indicate a load of the further radio access nodes being under a defined load threshold.

10. Network entity of one of the preceding claims, wherein the network entity (101, 201) is embodied as a radio access node, and wherein the processor (105, 205) is adapted to temporarily increase the share for handover traffic over a pre-defined handover capacity when a load of the radio access node (101, 201) is low and the received load indications indicate a load of the further radio access nodes being under a defined load threshold.

11. Network entity of one of the preceding claims, wherein the processor (105, 205) is configured to change a handover capacity of the resource management in dependence on the received load indications and in dependence on at least one criterion of the group of: first criterion indicating expected user mobility, second criterion indicating currently running service types, and third criterion indicating detailed load information.

12. System (301, 401) for communications in a communication network, the system comprising a plurality of network entities (303-309, 403-409) of one of the claims 1 to 11.

13. System of claim 12, comprising a categorizer (411) adapted to categorize the network entities (403-409) into different categories in dependence on respective properties of the subscriber entities allocated to the respective network entity (403-409), wherein the processor of the respective network entity (403-409) is adapted to weight the respective received load indication in dependence on the category of the respective network entity (403-409) and to control the resource management in the network entity (403-409) in dependence on the weighted load indications.

14. Method for controlling a network entity in a communication network, the network entity being able to communicate with at least a number of further network entities in the communication network, the method comprising:
receiving (501) a number of load indications, each of the number of load indications indicating a current load of at least one further network entity in the communication network,
controlling (503) a resource management of the network entity in dependence on the received load indications, and
**characterized by**
performing admission control by changing pre-configured shares for handover traffic, real-time traffic or non-real time traffic of the resource management in dependence on the received current load indications.

## Patentansprüche

1. Netzwerkeinheit (101, 201) für Kommunikationen in einem Kommunikationsnetzwerk, wobei die Netzwerkeinheit (101, 201) in der Lage ist, mit zumindest einer Anzahl von weiteren Netzwerkeinheiten in dem Kommunikationsnetzwerk zu kommunizieren, wobei die Netzwerkeinheit (101, 201) Folgendes umfasst:
einen Empfänger (103, 203), dazu ausgeführt, eine Anzahl von Lastindikationen zu empfangen, wobei jede der Anzahl von Lastindikationen eine aktuelle Last von zumindest einer weiteren Netzwerkeinheit in dem Kommunikationsnetzwerk anzeigt, und
einen Prozessor (105, 205), dazu ausgeführt, eine Ressourcenverwaltung der Netzwerkeinheit (101, 201) in Abhängigkeit von den empfangenen Lastindikationen zu steuern, **dadurch gekennzeichnet, dass** er ferner Folgendes umfasst:
eine Zugangssteuerungseinheit (207), die dazu ausgeführt ist, vorab ausgelegte Anteile für Übergabeverkehr, Echtzeitverkehr oder Nicht-Echtzeitverkehr der Ressourcenverwaltung in Abhängigkeit von einem Verarbeitungsschema zu ändern, das der Prozessor (205) bezüglich der empfangenen aktuellen Lastindikationen durchführt.

2. Netzwerkeinheit nach Anspruch 1, wobei die jeweilige Lastindikation einen ersten Indikator, der einen Echtzeitverkehr der jeweiligen weiteren Netzwerkeinheit anzeigt, und einen zweiten Indikator, der einen Gesamtverkehr der jeweiligen weiteren Netzwerkeinheit anzeigt, umfasst.

3. Netzwerkeinheit nach einem der vorhergehenden Ansprüche, wobei der Prozessor (105, 205) dazu ausgeführt ist, aus den empfangenen aktuellen Lastindikationen einen Schätzwert für die Übergabekapazität gemäß der Wahrscheinlichkeit für Übergabe von den anderen Netzwerkeinheiten zu bestimmen und eine Übergabekapazität der Ressourcenverwaltung in Abhängigkeit von dem berechneten Schätzwert zu ändern.

4. Netzwerkeinheit nach einem der vorhergehenden Ansprüche, wobei die Netzwerkeinheit (101, 201) als ein Funkzugangsknoten ausgeführt ist.

5. Netzwerkeinheit nach einem der vorhergehenden Ansprüche, wobei die Netzwerkeinheit (101, 201) als ein Funkzugangsknoten ausgeführt ist und wobei der Prozessor (105, 205) dazu ausgeführt ist, eine Zugangssteuerung der Ressourcenverwaltung in Abhängigkeit von den von einer Anzahl von weiteren Funkzugangsknoten empfangenen Lastindikationen zu ändern.

6. Netzwerkeinheit nach einem der vorhergehenden Ansprüche, wobei die Netzwerkeinheit (101, 201) als ein Funkzugangsknoten ausgeführt ist und wobei der Prozessor (105, 205) dazu ausgeführt ist, eine Zugangssteuerung der Ressourcenverwaltung in Abhängigkeit von den von einer Anzahl von weiteren Funkzugangsknoten empfangenen Lastindikationen und in Abhängigkeit von einer Schätzung einer Übergabekapazität für eine Übergabe von einem aus der Anzahl von Funkzugangsknoten zu ändern.

7. Netzwerkeinheit nach einem der vorhergehenden Ansprüche, wobei die Netzwerkeinheit (101, 201) als ein Funkzugangsknoten ausgeführt ist und wobei der Prozessor (105, 205) dazu ausgeführt ist, eine Zugangssteuerung der Ressourcenverwaltung in Abhängigkeit von den von einer Anzahl von weiteren Funkzugangsknoten empfangenen Lastindikationen zu ändern.

8. Netzwerkeinheit nach einem der vorhergehenden Ansprüche, wobei die Netzwerkeinheit (101, 201) als ein Funkzugangsknoten ausgeführt ist und wobei der Prozessor (105, 205) dazu ausgeführt ist, eine Zugangssteuerung der Ressourcenverwaltung in Abhängigkeit von den von einer Anzahl von weiteren Funkzugangsknoten empfangenen Lastindikationen zu ändern, sodass Anteile für Echtzeitverkehr oder Nicht-Echtzeitverkehr für den Fall erhöht werden, dass die empfangenen Lastindikationen anzeigen, dass eine Last der weiteren Funkzugangsknoten unter einer definierten Lastschwelle ist.

9. Netzwerkeinheit nach einem der vorhergehenden Ansprüche, wobei die Netzwerkeinheit (101, 201) als ein Funkzugangsknoten ausgeführt ist und wobei der Prozessor (105, 205) dazu ausgeführt ist, die Anteile für Echtzeitverkehr und Nicht-Echtzeitverkehr durch Verwenden von Ressourcen der Übergabekapazität vorübergehend zu erhöhen, wenn die empfangenen Lastindikationen anzeigen, dass eine Last der weiteren Funkzugangsknoten unter einer definierten Lastschwelle ist.

10. Netzwerkeinheit nach einem der vorhergehenden Ansprüche, wobei die Netzwerkeinheit (101, 201) als ein Funkzugangsknoten ausgeführt ist und wobei der Prozessor (105, 205) dazu ausgeführt ist, den Anteil für Übergabeverkehr vorübergehend über eine vordefinierte Übergabekapazität zu erhöhen, wenn die Last des Funkzugangsknotens (101, 201) niedrig ist und die empfangenen Lastindikationen anzeigen, dass eine Last der weiteren Funkzugangsknoten unter einer definierten Lastschwelle ist.

11. Netzwerkeinheit nach einem der vorhergehenden Ansprüche, wobei der Prozessor (105, 205) dazu ausgelegt ist, eine Übergabekapazität der Ressourcenverwaltung in Abhängigkeit von den empfangenen Lastindikationen und in Abhängigkeit von zumindest einem Kriterium aus der folgenden Gruppe zu ändern: erstes Kriterium, eine erwartete Benutzermobilität anzeigend, zweites Kriterium, momentan ausgeführte Diensttypen anzeigend, und drittes Kriterium, detaillierte Lastinformationen anzeigend.

12. System (301, 401) für Kommunikationen in einem Kommunikationsnetzwerk, wobei das System mehrere Netzwerkeinheiten (303-309,403-409) nach einem der Ansprüche 1 bis 11 umfasst.

13. System nach Anspruch 12, umfassend einen Kategorisierer (411), dazu ausgeführt, die Netzwerkeinheiten (403-409) in unterschiedliche Kategorien zu kategorisieren, in Abhängigkeit von den entsprechenden Eigenschaften der Teilnehmereinheiten, die der jeweiligen Netzwerkeinheit (403-409) zugeordnet sind, wobei der Prozessor der jeweiligen Netzwerkeinheit (403-409) dazu ausgeführt ist, die jeweilige empfangene Lastindikation in Abhängigkeit von der Kategorie der jeweiligen Netzwerkeinheit (403-409) zu gewichten und die Ressourcenverwaltung in der Netzwerkeinheit (403-409) in Abhängigkeit von den gewichteten Lastindikationen zu steuern.

14. Verfahren zum Steuern einer Netzwerkeinheit in einem Kommunikationsnetzwerk, wobei die Netzwerkeinheit in der Lage ist, mit zumindest einer Anzahl von weiteren Netzwerkeinheiten im Kommunikationsnetzwerk zu kommunizieren, wobei das Verfahren Folgendes umfasst: Empfangen (501) einer Anzahl von Lastindikationen, wobei jede der Anzahl von Lastindikationen eine aktuelle Last von zumindest einer weiteren Netzwerkeinheit im Kommunikationsnetzwerk anzeigt,
Steuern (503) einer Ressourcenverwaltung der Netzwerkeinheit in Abhängigkeit von den empfangenen Lastindikationen, und **gekennzeichnet durch**
Durchführen von Zugangssteuerung durch Ändern vorab ausgelegter Anteile für Übergabeverkehr, Echtzeitverkehr oder Nicht-Echtzeitverkehr der Ressourcenverwaltung in Abhängigkeit von den empfangenen aktuellen Lastindikationen.

## Revendications

1. Entité de réseau (101, 201) pour des communications dans un réseau de communication, l'entité de réseau (101, 201) pouvant communiquer avec au moins un certain nombre d'autres entités de réseau dans le réseau de communication, l'entité de réseau (101, 201) comprenant :
un récepteur (103, 203) conçu pour recevoir un nombre d'indications de charge, chacune des indications de charge indiquant une charge actuelle d'au moins une autre entité de réseau dans le réseau de communication, et
un processeur (105, 205) conçu pour commander une gestion de ressources de l'entité de réseau (101, 201) en fonction des indications de charge reçues,
**caractérisée en ce qu'**elle comprend en outre :
une entité de contrôle d'admission (207) qui est conçue pour modifier des parts préconfigurées pour un trafic de transfert intercellulaire, un trafic en temps réel ou un trafic non en temps réel de la gestion des ressources en fonction d'un processus de traitement exécuté par le processeur (205) sur la base des indications de charge actuelles reçues.

2. Entité de réseau selon la revendication 1, dans laquelle l'indication de charge respective comprend un premier indicateur indiquant un trafic en temps réel de l'autre entité de réseau respective et un second indicateur indiquant un trafic global de l'autre entité de réseau respective.

3. Entité de réseau selon l'une des revendications précédentes, dans laquelle le processeur (105, 205) est conçu pour déterminer, à partir des indications de charge actuelle reçues, une valeur d'estimation de la capacité de transfert intercellulaire en fonction de la probabilité de transfert intercellulaire d'autres entités de réseau et pour modifier une capacité de transfert intercellulaire de la gestion des ressources en fonction de la valeur d'estimation calculée.

4. Entité de réseau selon l'une des revendications précédentes, dans laquelle l'entité de réseau (101, 201) est réalisée sous la forme d'un noeud d'accès radio.

5. Entité de réseau selon l'une des revendications précédentes, dans laquelle l'entité de réseau (101, 201) est réalisée sous la forme d'un noeud d'accès radio, et dans laquelle le processeur (105, 205) est conçu pour modifier une commande d'admission de la gestion de ressources en fonction des indications de charge reçues d'un certain nombre d'autres noeuds d'accès radio.

6. Entité de réseau selon l'une des revendications précédentes, dans laquelle l'entité de réseau (101, 201) est réalisée sous la forme d'un noeud d'accès radio, et dans laquelle le processeur (105, 205) est conçu pour changer une commande d'admission de la gestion des ressources en fonction des indications de charge reçues d'un certain nombre d'autres noeuds d'accès radio et en fonction d'une estimation de la capacité de transfert intercellulaire pour un transfert intercellulaire à partir d'un noeud choisi parmi les noeuds d'accès radio.

7. Entité de réseau selon l'une des revendications précédentes, dans laquelle l'entité de réseau (101, 201) est réalisée sous la forme d'un noeud d'accès radio, et dans laquelle le processeur (105, 205) est conçu pour modifier une commande d'admission de la gestion de ressources en fonction des indications de charge reçues d'un certain nombre d'autres noeuds d'accès radio.

8. Entité de réseau selon l'une des revendications précédentes, dans laquelle l'entité de réseau (101, 201) est réalisée sous la forme d'un noeud d'accès radio, et dans laquelle le processeur (105, 205) est conçu pour modifier une commande d'admission de la gestion de ressources en fonction des indications de charge reçues d'un certain nombre d'autres noeuds d'accès radio de sorte que les parts correspondant au trafic en temps réel ou au trafic non en temps réel soient augmentées dans le cas où les indications de charge reçues indiquent une charge des autres noeuds d'accès radio se trouvant en dessous d'un seuil de charge défini.

9. Entité de réseau selon l'une des revendications précédentes, dans laquelle l'entité de réseau (101, 201) est réalisée sous la forme d'un noeud d'accès radio, et dans laquelle le processeur (105, 205) est conçu pour augmenter temporairement les parts correspondant au trafic en temps réel et au trafic non en temps réel en utilisant des ressources de la capacité de transfert intercellulaire lorsque les indications de charge reçues indiquent qu'une charge des autres noeuds d'accès radio est inférieure à un seuil de charge défini.

10. Entité de réseau selon l'une des revendications précédentes, dans laquelle l'entité de réseau (101, 201) est réalisée sous la forme d'un noeud d'accès radio, et dans laquelle le processeur (105, 205) est conçu pour augmenter temporairement la part du trafic de transfert intercellulaire par rapport à une capacité de transfert intercellulaire prédéfinie lorsqu'une charge du noeud d'accès radio (101, 201) est faible et que les indications de charge reçues indiquent une charge des autres noeuds d'accès radio qui est inférieure à un seuil de charge défini.

11. Entité de réseau selon l'une des revendications précédentes, dans laquelle le processeur (105, 205) est configuré pour modifier une capacité de transfert intercellulaire de la gestion des ressources en fonction des indications de charge reçues et en fonction d'au moins un critère choisi dans le groupe formé par : un premier critère indiquant la mobilité attendue de l'utilisateur, un second critère indiquant les types de service en cours d'exécution et un troisième critère indiquant des informations détaillées sur la charge.

12. Système (301, 401) pour effectuer des communications dans un réseau de communication, le système comprenant une pluralité d'entités de réseau (303-309, 403-409) selon l'une des revendications 1 à 11.

13. Système selon la revendication 12, comprenant un sélecteur de catégories (411) conçu pour catégoriser les entités de réseau (403-409) en différentes catégories en fonction des propriétés respectives des entités d'abonné attribuées à l'entité de réseau respective (403-409), dans lequel le processeur de l'entité de réseau respective (403-409) est conçu pour pondérer l'indication respective de charge reçue en fonction de la catégorie de l'entité de réseau respective (403-409) et pour commander la gestion des ressources dans l'entité de réseau (403-409) en fonction des indications de charge pondérée.

14. Procédé de contrôle d'une entité de réseau dans un réseau de communication, l'entité de réseau pouvant communiquer avec au moins un certain nombre d'autres entités de réseau dans le réseau de communication, le procédé comprenant les étapes consistant à :
recevoir (501) un certain nombre d'indications de charge, chacune des indications de charge indiquant une charge actuelle d'au moins une autre entité de réseau dans le réseau de communication,
commander (503) une gestion des ressources de l'entité de réseau en fonction des indications de charge reçues, et
**caractérisé par** l'exécution d'un contrôle d'admission en modifiant des parts préconfigurées pour le trafic de transfert intercellulaire, le trafic en temps réel ou le trafic non en temps réel de la gestion des ressources en fonction des indications de charge actuelles reçues.
